# EUROPÄISCHE PATENTSCHRIFT

(11) **EP 2 470 850 B1**
(45) Veröffentlichungstag und Bekanntmachung des Hinweises auf die Patenterteilung: **02.11.2016**
(21) Anmeldenummer: 10755091.5
(22) Anmeldetag: 11.08.2010
(51) Int. Cl.: F25B 30/00, F24D 19/10, F24D 17/02, F24D 11/02

(54) **SYMMETRISCHE ZWISCHENSPEICHER FÜR WÄRMEPUMPEN MIT ZYKLISCHER ENTLEERUNG IN EIN HAUPTSYSTEM**
SYMMETRICAL INTERMEDIATE STORAGE MEANS FOR HEAT PUMPS WITH CYCLICAL DRAINAGE INTO A MAIN SYSTEM
RÉSERVOIRS TAMPONS SYMÉTRIQUES POUR POMPES À CHALEUR À VIDANGE CYCLIQUE DANS UN SYSTÈME PRINCIPAL

(30) Priorität: 25.08.2009 DE 102009039505
(43) Veröffentlichungstag der Anmeldung: 04.07.2012
(73) Patentinhaber: Löffler, Michael, 76751 Jockgrim (DE)
(72) Erfinder: Löffler, Michael, 76751 Jockgrim (DE)
(74) Vertreter: Fleuchaus, Michael A.
(86) Internationale Anmeldenummer: PCT/EP2010/004887
(87) Internationale Veröffentlichungsnummer: WO 2011/023289

(56) Entgegenhaltungen:
- DE-A1- 2 749 714
- US-A1- 2004 079 749

## Beschreibung

### Stand der Technik

Wärmepumpen werden zur Zeit teilweise an einen Pufferspeicher angeschlossen. Aus dem Pufferspeicher kann je nach Aufbau Heizungswasser oder (mittels eines Wärmetauschers) Brauchwasser entnommen werden. Wärmepumpen arbeiten zur Zeit überwiegend mit einer Temperaturspreizung von ca. 5 bis 10 K. Der Pufferspeicher wird bei dieser Spreizung auf eine gewünschte Solltemperatur gebracht. Es ist ersichtlich, dass der gesamte Pufferspeicher am Ende einer Ladungsphase von der Wärmepumpe auf eine hohe Durchschnittstemperatur gebracht ist. Der Speicher wird durchgeheizt.

Die Verwendung von geschichteten Speichern, wie sie z.B. in der DE2749714 gezeigt sind, führt in Kombination mit Wärmepumpen oder Kältemaschinen nicht zu einer deutlichen Verbesserung der Arbeitszahl, da auch mit geschichteten Speichern die Anpassung der geringen Spreizung der Wärmepumpe / Kältemaschine an die hohe Spreizung des Restsystems nicht gelingt.

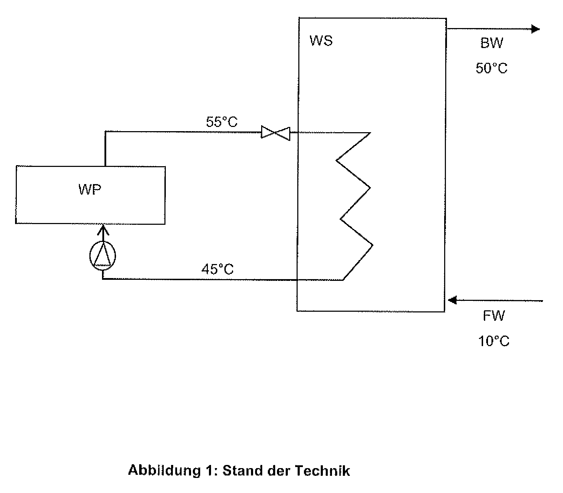

**Abbildung 1** zeigt den Aufbau einer herkömmlichen Heizanlage mit Wärmepumpe zur Brauchwassererwärmung. Die Wärmepumpe gibt mit dem Wärmeträgermedium und in einem Wärmetauscher, der sich hier in dem Brauchwasserspeicher befindet, Wärme an den Brauchwasserspeicher ab. Dabei wird der gesamte Speicher zyklisch auf das Nutzniveau hoch geheizt. Im oberen Bereich des Speichers kann heißes Brauchwasser entnommen werden. Im Fall der Entnahme strömt im unteren Bereich des Speichers kaltes Wasser nach. Ist die Wärmepumpe gleichzeitig mit der Zapfung in Betrieb oder ist der Wasserspeicher teilweise entladen, so gelangt kaltes Wasser in die Wärmepumpe und wird nur leicht erwärmt in den oberen heißen Bereich des Pufferspeichers eingebracht. Die fortgeschrittene Schichtung im Wasserspeicher wird dabei im weiteren Ladungsvorgang zerstört. Dabei wird Exergie vernichtet, die Systemarbeitszahl sinkt.

Neuerdings werden Zwischenspeicher vorgeschlagen, die einen relativ vermischungsfreien Speicherladungsvorgang erlauben. Diese Systeme lösten folgende Probleme:
1. Bei der Einschichtung in einen Brauchwasserspeicher vermischen sich die erwärmten Wasserbereiche mit den kälteren Wasserschichten nicht. Exergievernichtung tritt stark reduziert auf.
2. Der Aufheizvorgang, also bis im oberen Teil des Pufferspeichers nach einer Zapfung wieder Wärmespeichermedium mit Nutztemperaturniveau zur Verfügung steht, ist sehr kurz.
3. Im unteren Teil des Pufferspeichers befindet sich im Normalfall kaltes Wärmeträgermedium. Beim bivalenten Betrieb des Pufferspeichers im Verbund mit anderen Energieerzeugungsanlagen wie Brennwertkessel oder Solaranlage wirkt sich dieser Zustand positiv auf die Systemwirkungsgrade der genannten Teilsysteme aus.
4. Der Pufferspeicher kann ohne Komfortverlust mit einer geringen Mitteltemperatur gefahren werden, was zu geringen Wärmeverlusten durch die Wärmedämmung des Pufferspeichers führt. Die Systemarbeitszahl kann insgesamt um 20% bis 30% ansteigen.

Nachteilig bei den gezeigten Systemen ist, dass sich bei einigen der Systeme im Zwischenspeicher für kurze Zeiten kälteres Wasser oberhalb von wärmerem Wasser befindet, wobei dieser Zustand zu einer ungewollten und nachteiligen weil exergievernichtenden Vermischung des kalten und des warmen Wassers führen kann. Systeme, bei denen die Vermischung nicht auftritt, sind kompliziert aufgebaut und erfordern eine Vielzahl von Ventilen.

### Zu lösende Probleme

Aufgabe der Erfindung ist es, ein optimiertes System von Wärmepumpe und Zwischenspeichern bereitzustellen, wobei das System einen einfachen Aufbau aufweist und sich insbesondere in den Zwischenspeichern immer wärmeres oberhalb von kälterem Wärmeträgermedium befindet.

### Zyklische Zwischenspeicher mit symmetrischem Aufbau

Zur Lösung der genannten Probleme erfolgt durch ein Temperiersystem gemäß Anspruch 1 sowie ein Verfahren gemäß Anspruch 5 bzw.6. Bevorzugte Ausführungsformen sind Gegenstand der jeweils abhängigen Ansprüche.

Beim erfindungsgemäßen Temperiersystem wird Wärmeträgermedium abwechselnd von Zwischenspeicher 1 und 2 in das Restsystem, z.B. einen Pufferspeicher, gepumpt. Während dieses Pumpvorgangs wird kaltes Wasser aus dem Restsystem in den Zwischenspeicher gepumpt. Grundsätzliche wird also die Verwendung zweier symmetrisch angeordneter Zwischenspeicher in Verbindung mit einer Wärmepumpe zur Temperierung eines Wärmeträgermediums und Beförderung des temperierten Wärmeträgermediums in ein Restsystem beschrieben, welches in einem häufigen Fall eine Heizungsanlage ist. Während der eine Speicher das Wärmeträgermedium an das Restsystem abgibt, wird der Inhalt des anderen Speichers von der Wärmepumpe erwärmt. Die Temperaturspreizung im Wärmepumpenkreis ist dabei sehr klein und der Volumenstrom sehr groß im Vergleich zum Temperaturhub und dem Volumenstrom des Restsystems. Diese Randwerte sind für die Effizienz beider Teilsysteme von Vorteil.

Die Zwischenspeicher sind so angeordnet, dass sie das Temperieren des im Zwischenspeicher befindlichen Wärmeträgermediums erlauben und dieses nach der Temperierung in das restliche System abgeben können. Die Abgabe an das restliche System, z.B. in einen Brauchwasserspeicher, erfolgt also bei Bedarf abwechselnd von Zwischenspeicher 1 und 2.

In einer Ausführungsform der Erfindung weist das Restsystem einen Pufferspeicher auf, wobei der Pufferspeicher eine Temperaturschichtung erlaubt.

Es sei hier ausdrücklich darauf hingewiesen, dass mit Temperierung auch Kühlung gemeint ist, die Erfindung also auch für den Fall der Kälteerzeugung gilt, wobei die Be- und Entladestutzen im Fall der Kühlung vertauscht angeordnet sein müssen, sodass die Beladung durch die Kältemaschine von unten nach oben und Entladung ins Restsystem von oben nach unten erfolgt.

Auf diese Weise ist gesichert, dass sich zu jeder Zeit kälteres Wärmeträgermedium unterhalb von wärmerem Wärmeträgermedium befindet und die Temperaturschichtung in den Zwischenspeichern stabil bleibt.

Bei einer Ausführungsform der Erfindung werden die Zwischenspeicher bei deren Beladung von oben nach unten durchströmt und bei der Entladung von unten nach oben. Im Fall des Betriebes mit einer Kältemaschine erfolgt die Be- bzw. Entladung umgekehrt, also bei der Beladung der Zwischenspeicher mit kalter Wärmeträgerflüssigkeit von unten nach oben und bei der Entladung in das Restsystem von oben nach unten.

Bevorzugt findet das erfindungsgemäße Temperiersystem Verwendung bei der Wärmeversorgung von Gebäuden und ggf. zur Versorgung mit heißem Brauchwasser.

### Arbeitsweise der Systeme mit zwei symmetrischen Zwischenspeichern

Ist das gesamte temperierte Wasser aus dem Zwischenspeicher 1 in das restliche System gebracht, werden die Ventile wieder so geschalten, dass der Zwischenspeicher 1 über die Wärmepumpe erneut temperiert werden kann.

Es muss darauf geachtet werden, dass die beteiligten Speicher so ausgeführt sind, dass eine möglichst vermischungsfreie Beladung, Speicherung (vorteilhafter weise mit Schichtung) und Entladung möglich ist. Beispielsweise können Prallbleche zur Vermeidung von Verwirbelungen und Vermischungen eingesetzt werden.

Bei der Entladung des Zwischenspeichers in das Restsystem wird Wärmeträgerflüssigkeit mit der gewünschten Temperatur und, im Vergleich zu üblichen Systemen ohne Zwischenspeicher, mit einem deutlich verringerten mittleren Volumenstrom übertragen. Hohe Temperatur und geringer Volumenstrom führen dazu, dass:
1. die Schichtung im ggf. vorhandenen Hauptspeicher beim Betrieb des Systems erhalten bleibt,
2. heißes Wärmeträgermedium bereits nach kurzer Zeit zur Verfügung steht,
3. dass weitere energieerzeugende Anlagen im System wie z.B. Brennwertkessel oder Solaranlage mit einem besseren Wirkungsgrad arbeiten können, da sich im unteren Bereich des Hauptspeichers kaltes Wärmeträgermedium befindet,
4. dass die thermischen Verluste des Hauptspeichers reduziert werden,
5. dass die Arbeitszahl des Systems um 20% bis 30% steigt.

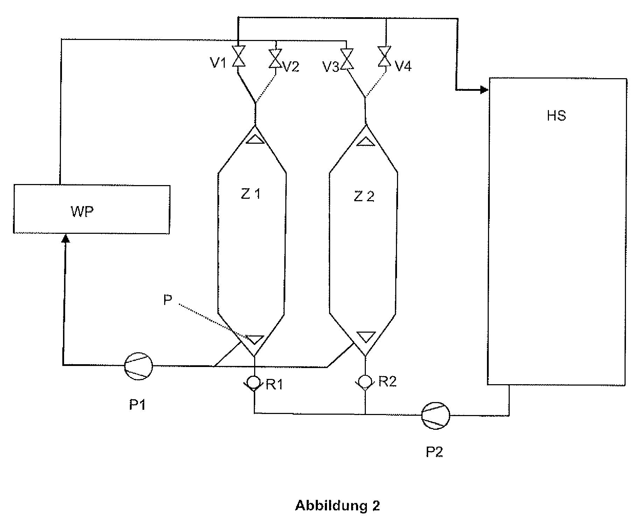

Zur Veranschaulichung der Lage und Funktion des Zwischenspeichers und eines nachfolgenden Systems ist in der **Abbildung 2** ein Heizsystem mit Wärmepumpe und zwei symmetrischen Zwischenspeichern zur Brauchwassererwärmung dargestellt. Rückschlagventile verhindern eine Vermischung der beiden Kreise. Regler und weitere erforderliche Bauteile sind in den Abbildungen nicht eingezeichnet.

Bei Systemen mit Heizungsanbindung (nicht eingezeichnet) wird je nach Bedarfsfall der Zwischenspeicher entweder bis zur gewünschten Brauchwassertemperatur hoch geheizt und dann in den Brauchwasserspeicher gepumpt, oder der Zwischenspeicher nur bis zur gewünschten Raumheizungstemperatur hoch geheizt und dann in den Heizungspufferspeicher gepumpt. Eine Regelungseinheit ermittelt zu diesem Zweck den Bedarfsfall Brauchwassererwärmung und Raumheizung und steuert die entsprechenden Ventile.

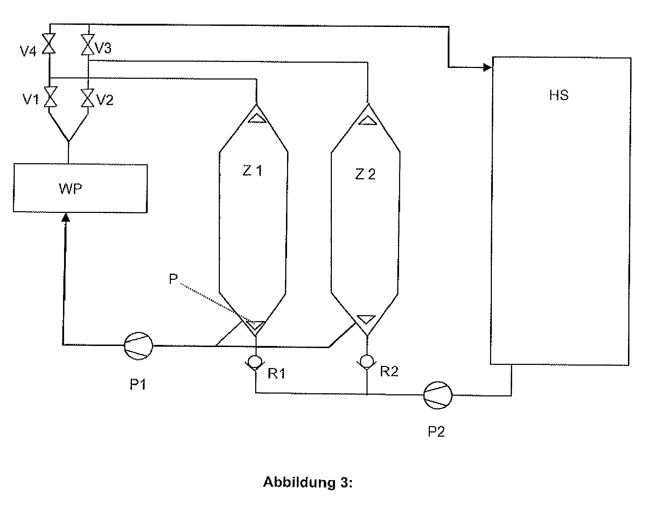

**Abbildung 3** zeigt einen Aufbau, bei dem die Anordnung der Rohrleitungen optimiert ist. In diesem Aufbau wird heißes Wasser, welches sich in den Rohrleitungen von der Wärmepumpe zum Zwischenspeicher befindet in den Brauchwasserspeicher gepumpt. Die Exergievernichtung wird durch diese Anordnung weiter gesenkt.

Die vorgeschlagenen Zwischenspeicher können bei Neuanlagen direkt in die Wärmepumpe integriert sein. Es sind jedoch auch Nachrüstsätze für Altanlagen marktfähig.

Die Regelung der Ventilumschaltung ergibt sich logisch aus der Funktion des Systems.

### Detaillierte Beschreibung der Abbildungen

**Abbildung 1** zeigt den Aufbau eines herkömmlichen Heizsystems zur Brauchwassererwärmung mit Wärmepumpe WP. Die Wärmepumpe erwärmt das Wärmeträgermedium. Das Wärmeträgermedium gibt die Wärme mittels eines Wärmetauschers, der sich hier in dem Brauchwasserspeicher WS befindet, an das Brauchwasser ab. Dabei wird der gesamte Speicher auf das Nutzniveau hoch geheizt. Im oberen Bereich des Speichers kann heißes Wasser BW entnommen werden. Im Fall der Entnahme strömt im unteren Bereich des Speichers kaltes Wasser FW nach.

**Abbildung 2** zeigt den Aufbau eines erfindungsgemäßen Heizsystems mit Wärmepumpe WP und zwei Zwischenspeichern Z1, Z2. In einem ersten Takt sind V1 und V3 geöffnet und V2 und V4 geschlossen. Zwischenspeicher Z1 wird über die Wärmepumpe mit hohem Volumenstrom und geringer Spreizung beladen. Gleichzeitig wird Zwischenspeicher Z2 mit geringem Volumenstrom in den Hauptspeicher HS entladen, wobei kaltes Wasser vom Hauptspeicher über Rückschlagventil R2 in den Zwischenspeicher Z2 zurück strömt. Im zweiten Takt sind V2 und V4 geöffnet und V1 und V3 geschlossen. Die Rolle der Zwischenspeicher ist dadurch vertauscht: Zwischenspeicher Z1 wird dann entladen und Zwischenspeicher Z2 wird beladen.

Zur Vermeidung von Verwirbelungen und Vermischungen sind die Zwischenspeicher mit Prallblechen P ausgeführt, wie gezeigt.

**Abbildung 3** zeigt prinzipiell den gleichen Aufbau wie in Abbildung 2, wobei die Rohrführung optimiert ist. Heißes Wasser, welches sich zwischen Wärmepumpe und Zwischenspeicher befindet wird in Abbildung 3 beim Umschalten der Ventile in den Pufferspeicher gepumpt. In Abbildung 2 vermischt sich das heiße Wasser hingegen mit kaltem Wasser, was einer, wenn auch geringen, Exergievernichtung entspricht.

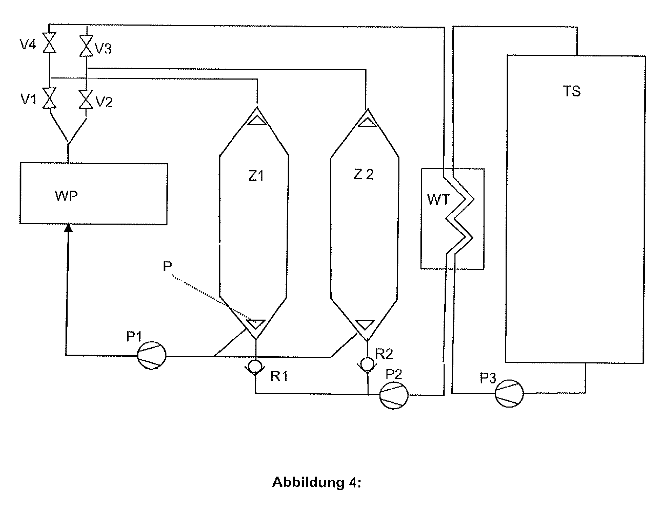

**Abbildung 4** zeigt den Aufbau eines Systems zur Brauchwassererwärmung mit Wärmetauscher WT. Das erwärmte Wasser aus den Zwischenspeichern gibt seine Wärme über einen Wärmetauscher WT an das Trinkwasser ab. In dem Aufbau ist aufgrund des Trinkwasserkreises eine weitere Wasserpumpe P3 erforderlich. Der Wärmetauscher WT arbeitet aufgrund des geringen Volumenstroms mit einem sehr guten Wirkungsgrad.

## Patentansprüche

1. Temperiersystem mit einer Wärmepumpe oder Kältemaschine, einem ersten Zwischenspeicher (Z1), einem zweiten Zwischenspeicher (Z2), Ventilen, einer Regelungseinheit, und einem Restsystem, wobei das Restsystem mit temperierter Wärmeträger-flüssigkeit versorgt wird,
**dadurch gekennzeichnet, dass**
das Temperiersystem zwei Pumpen (P1, P2) umfasst, und die Regelungseinheit eingerichtet ist, um:
in einem ersten Takt die Ventile zu schalten, so dass die Wärmepumpe oder Kältemaschine die Wärmeträgerflüssigkeit im ersten Zwischenspeicher (Z1) auf ein gewünschtes Temperaturniveau bringt, während vom zweiten Zwischenspeicher (Z2) temperierte Wärmeträgerflüssigkeit an das Restsystem abgegeben wird, und wobei
in einem zweiten Takt die Ventile zu schalten, so dass die Wärmepumpe oder Kältemaschine die Wärmeträgerflüssigkeit im zweiten Zwischenspeicher (Z2) auf ein gewünschtes Temperaturnniveau bringt, während vom ersten Zwischenspeicher (Z1) temperierte Wärmeträgerflüssigkeit an das Restsystem abgegeben wird, und wobei im abwechselnden Betrieb in dem ersten bzw. zweiten Takt, Wärmeträgerflüssigkeit abwechselnd vom zweiten bzw. ersten Zwischenspeicher (Z2, Z1) in das Restsystem gepumpt wird, und während dieses Pumpvorgangs abgekühlte oder erwärmte Wärmeträgerflüssigkeit aus dem Restsystem in den zweiten bzw. ersten Zwischenspeicher gepumpt wird.

2. Temperiersystem gemäß Anspruch 1,
**dadurch gekennzeichnet, dass**
das Restsystem eine Heizungsanlage mit Pufferspeicher umfasst, in den temperierte Wärmeträgerflüssigkeit gepumpt werden kann, wobei der Pufferspeicher vorzugsweise eine geschichtete Wärmespeicherung erlaubt.

3. Temperiersystem gemäß einem der Ansprüche 1 oder 2,
**dadurch gekennzeichnet, dass**
fürden Fall einer Kältemaschine die Beladestutzen an dem ersten und zweiten Zwischenspeicher (Z1, Z2) unten angeordnet sind, und die Entladestutzen an dem ersten und zweiten Zwischenspeicher (Z1, Z2) oben angeordnet sind, wodurch die Beladung der Zwischenspeicher über die Kältemaschine von unten nach oben erfolgen kann, und die Entladung ins Restsystem in entgegengesetzter Richtung.

4. Temperiersystem gemäß einem der Ansprüche 1 oder 2,
**dadurch gekennzeichnet, dass**
für den Fall einer Wärmepumpe die Beladestutzen an dem ersten und zweiten Zwischenspeicher (Z1, Z2) oben angeordnet sind, und die Entladestutzen an dem ersten und zweiten Zwischenspeicher (Z1, Z2) unten angeordnet sind, wodurch die Beladung der Zwischenspeicher überdie Wärmepumpe von oben nach unten erfolgen kann, und die Entladung ins Restsystem in entgegengesetzter Richtung.

5. Verfahren zum Betrieb eines Temperiersystems mit einer Wärmepumpe, einem ersten Zwischenspeicher (Z1), einem zweiten Zwischenspeicher (Z2), Ventilen, und einem Restsystem, wobei das Restsystem mit temperierter Wärmeträgerflüssigkeit versorgt wird,
**dadurch gekennzeichnet, dass**
das Temperiersystem zwei Pumpen (P1, P2) umfasst, und die Wärmepumpe in einem ersten Takt die Wärmeträgerflüssigkeit im ersten Zwischenspeicher (Z1) auf ein gewünschtes Temperaturniveau bringt, während vom zweiten Zwischenspeicher (Z2) temperierte Wärmeträgerflüssigkeit an das Restsystem abgegeben wird, und die Wärmepumpe in einem zweiten Takt die Wärmeträgerflüssigkeit im zweiten Zwischenspeicher (Z2) auf ein gewünschtes Temperaturniveau bringt, während vom ersten Zwischenspeicher (Z1) temperierte Wärmeträgerflüssigkeit an das Restsystem abgegeben wird, und wobei
ein abwechselnder Betrieb des ersten bzw, zweiten Takts erfolgt, indem Wärmeträgerflüssigkeit abwechselnd vom zweiten bzw. ersten Zwischenspeicher in das Restsystem gepumpt wird, und während dieses Pumpvorgangs abgekühlte Wärmeträgerflüssigkeit aus dem Restsystem in den zweiten bzw. ersten Zwischenspeicher gepumpt wird.

6. Verfahren zum Betrieb eines Temperiersystems mit einer Kältemaschine, einem ersten Zwischenspeicher (Z1), einem zweiten Zwischenspeicher (Z2), Ventilen, und einem Restsystem, wobei das Restsystem mit temperierter Wärmeträgerflüssigkeit versorgt wird,
**dadurch gekennzeichnet, dass**
das Temperiersystem zwei Pumpen (P1, P2) umfasst, und die Kältemaschine in einem ersten Takt die Wärmeträgerflüssigkeit im ersten Zwischenspeicher (Z1) auf ein gewünschtes Temperaturniveau bringt, während vom zweiten Zwischenspeicher (Z2) temperierte Wärmeträgerflüssigkeit an das Restsystem abgegeben wird, und
die Kältemaschine in einem zweiten Takt die Wärmeträgerflüssigkeit im zweiten Zwischenspeicher (Z2) auf ein gewünschtes Temperaturniveau bringt, während vom ersten Zwischenspeicher (Z1) temperierte Wärmeträgerflüssigkeit an das Restsystem abgegeben wird, und wobei
ein abwechselnder Betrieb des ersten bzw. zweiten Takts erfolgt, indem Wärmeträgerflüssigkeit abwechselnd vom zweiten bzw. ersten Zwischenspeicher in das Restsystem gepumpt wird, und während dieses Pumpvorgangs erwärmte Wärmeträgerflüssigkeit aus dem Restsystem in den zweiten bzw. ersten Zwischenspeicher gepumpt wird.

7. Verfahren zum Betrieb eines Temperiersystems gemäß Anspruch 5,
**dadurch gekennzeichnet, dass**
die Zwischenspeicher bei der Beladung über die Wärmepumpe und der Entladung ins Restsystem in entgegengesetzter Richtungen durchströmt werden, wobei die Strömungsrichtung bei der Beladung über die Wärmepumpe von oben nach unten ist.

8. Verfahren zum Betrieb eines Temperiersystems gemäß Anspruch 6,
**dadurch gekennzeichnet, dass**
die Zwischenspeicher bei der Beladung über die Kältemaschine und der Entladung ins Restsystem in entgegengesetzter Richtungen durchströmt werden, wobei die Strömungsrichtung bei der Beladung über die Kältemaschine von unten nach oben ist.

9. Verwendung eines Temperiersystems gemäß einem der Ansprüche 1 bis 4 für die Raumheizung und/oderdie Brauchwassererwärmung.

## Claims

1. A temperature control system with a heat pump or refrigerating machine, a first intermediate storage means (Z1), a second intermediate storage means (Z2), valves, a control unit and a remaining system, the remaining system being supplied with temperature-controlled heat transfer liquid,
**characterized in that**
the temperature control system comprises two pumps (P1, P2), and
the control unit is arranged to:
in a first stroke, switch the valves In such a way that the heat pump or refrigerating machine takes the heat transfer liquid in the first intermediate storage means (Z1) to a desired temperature level, while temperature-controlled heat transfer liquid is discharged from the second Intermediate storage means (Z2) to the remaining system, and
in a second stroke, switch the valves in such a way that the heat pump or refrigerating machine takes the heat transfer liquid in the second intermediate storage means (Z2) to a desired temperature level, while temperature-controlled heat transfer liquid is discharged from the first intermediate storage means (Z1) to the remaining system, and wherein
in alternating operation, in the first and second strokes, respectively, heat transfer liquid is pumped into the remaining system alternately from the second and first intermediate storage means (Z2, Z1), respectively, and heat transfer liquid that has cooled or heated, during this pumping operation, is pumped from the remaining system into the second and first intermediate storage means, respectively.

2. The temperature control system as claimed in claim 1,
**characterized in that**
the remaining system comprises a heating installation with a buffer store into which temperature-controlled heat transfer liquid may be pumped, the buffer store preferably allowing stratified heat storage.

3. The temperature control system as claimed in either of claims 1 or 2,
**characterized in that**
forthe case of a refrigerating machine, the charge ports are disposed at the bottom of the first and second intermediate storage means (Z1, Z2) and the discharge ports are disposed at the top of the first and second storage means (Z1, Z2), which enables the charging of the intermediate storage means, through the refrigerating machine, to take place from the bottom upward, and the discharging to the remaining system to take place in the opposite direction.

4. The temperature control system as claimed in either of claims 1 or 2,
**characterized in that**
for the case of a heat pump, the charge ports are disposed at the top of the first and second intermediate storage means (Z1, Z2) and the discharge ports are disposed at the bottom of the first and second storage means (Z1, Z2), which enables the charging of the intermediate storage means, through the heat pump, to take place from the top downward, and the discharging to the remaining system to take place in the opposite direction.

5. A method of operating a temperature control system with a heat pump, a first intermediate storage means (Z1), a second intermediate storage means (Z2), valves and a remaining system, the remaining system being supplied with temperature-controlled heat transfer liquid,
**characterized in that**
the temperature control system comprises two pumps (P1, P2), and
in a first stroke, the heat pump takes the heat transfer liquid in the first intermediate storage means (Z1) to a desired temperature level, while temperature-controlled heat transfer liquid is discharged from the second intermediate storage means (Z2) to the remaining system, and
In a second stroke, the heat pump takes the heat transfer liquid in the second intermediate storage means (Z2) to a desired temperature level, while temperature-controlled heat transfer liquid is discharged from the first Intermediate storage means (Z1) to the remaining system, and wherein
there is alternating operation of the first and second strokes by alternately pumping heat transfer liquid Into the remaining system from the second and first intermediate storage means (Z2, Z1), respectively, and pumping heat transfer liquid that has cooled, during this pumping operation, from the remaining system into the second and first Intermediate storage means, respectively.

6. A method of operating a temperature control system with a refrigerating machine, a first intermediate storage means (Z1), a second intermediate storage means (Z2), valves and a remaining system, the remaining system being supplied with temperature-controlled heat transfer liquid,
**characterized in that**
the temperature control system comprises two pumps (P1, P2), and
in a first stroke, the refrigerating machine takes the heat transfer liquid in the first intermediate storage means (Z1) to a desired temperature level, while temperature-controlled heat transfer liquid is discharged from the second Intermediate storage means (Z2) to the remaining system, and
in a second stroke, the refrigerating machine takes the heat transfer liquid in the second intermediate storage means (Z2) to a desired temperature level, while temperature-controlled heat transfer liquid is discharged from the first intermediate storage means (Z1) to the remaining system, and wherein
there is alternating operation of the first and second strokes by alternately pumping heat transfer liquid Into the remaining system from the second and first intermediate storage means, respectlvely, and pumping heat transfer liquid that has heated, during this pumping operation, from the remaining system into the second and first intermediate storage means, respectively.

7. A method of operating a temperature control system as claimed In claim 5,
**characterized in that**
the flow through the Intermediate storage means, during charging through the heat pump and discharging to the remaining system, goes in opposite directions, the flow direction during charging through the heat pump being from the top downward.

8. A method of operating a temperature control system as claimed in claim 6,
**characterized in that**
the flow through the Intermediate storage means, during charging through the refrigeratIng machine and discharging to the remaining system, goes in opposite directions, the flow direction during charging through the refrigerating machine being from the bottom upward

9. The use of a temperature control system as claimed In any of claims 1 to 4 for room heating and/or service water heating.

## Revendications

1. Système de températion avec une pompe à chaleur ou une machine frigorifique, un premier réservoir Intermédiaire (Z1), un second réservoir intermédiaire(Z2), des soupapes, une unité de régulation, et un système restant, le système restant étant alimenté en liquide caloporteur tempéré,
**caractérisé en ce que**
le système de températion comporte deux pompes (P1, P2), et
l'unité de régulation est configurée afin :
lors d'une première phase, de commuter les soupapes afin que la pompe à chaleur ou la machine frigorifique amènent le liquide caloporteur dans le premier réservoir intermédiaire (Z1) à un niveau de température souhaité, tandis que le liquide caloporteur tempéré par le second réservoir intermédiaire (Z2) est remis au système restant et
lors d'une seconde phase, de commuter les soupapes afin que la pompe à chaleur ou la machine frigorifique amènent le liquide caloporteur dans le second réservoir intermédiaire (Z2) à un niveau de température souhaité, tandis que le liquide caloporteur tempéré par le premier réservoir Intermédiaire (Z1) est remis au système restant et
en fonctionnement alternant, lors de la première et/ou de la seconde phase, que du liquide caloporteur soit pompé en alternance du second et/ou premier réservoir intermédiaire (Z2, Z1) dans le système restant, et que le liquide caloporteur refroidi ou réchauffé pendant cette opération de pompage soit pompé du système restant dans le second et/ou premier réservoir Intermédiaire.

2. Système de températion selon la revendication 1,
**caractérisé en ce que**
le système restant comporte une installation de chauffage avec réservoir tampon, dans lequel du liquide caloporteur tempéré peut être pompé, le réservoir tampon permettant de préférence un stockage stratifié de la chaleur.

3. Système de températion selon une quelconque des revendications 1 ou 2,
**caractérisé en ce que**
pour le cas d'une machine frigorifique, les tubulures de chargement sont disposées en bas sur les premier et second réservoirs intermédiaires (Z1, Z2), et les tubulures de déchargement sont disposées en haut sur les premier et second réservoirs intermédiaires (Z1, Z2), par quoi le chargement des réservoirs intermédiaires peut s'effectuer via la machine frigorifique du bas vers le haut, et le déchargement dans le système restant dans le sens inverse.

4. Système de températion selon une quelconque des revendications 1 ou 2,
**caractérisé en ce que**
pour le cas d'une pompe à chaleur, les tubulures de chargement sont disposées en haut sur les premier et second réservoirs intermédiaires (Z1, Z2), et les tubulures de déchargement sont disposées en bas sur les premier et second réservoirs intermédiaires (Z1, Z2), par quoi le chargement des réservoirs intermédiaires peut s'effectuer via la pompe à chaleur du haut vers le bas, et le déchargement dans le système restant dans le sens inverse,

5. Procédé en vue de l'exploitation d'un système de températion avec une pompe à chaleur, un premier réservoir intermédiaire (Z1), un second réservoir intermédiaire (Z2), des soupapes et un système restant, le système restant étant alimenté en liquide caloporteur tempéré,
**caractérisé en ce que**
le système de températion comporte deux pompes (P1, P2), et
la pompe à chaleur amène le liquide caloporteur lors d'une première phase dans le premier réservoir intermédiaire (Z1) à un niveau de température souhaité, tandis que le liquide caloporteur tempéré par le second réservoir intermédiaire (Z2) est remis au système restant, et
la pompe à chaleur amène le liquide caloporteur lors d'une seconde phase dans le second réservoir intermédiaire (Z2) à un niveau de température souhaité, tandis que le liquide caloporteur tempéré par le premier réservoir Intermédiaire (Z1) est remis au système restant, et
un fonctionnement alternant de la première et/ou de la seconde phase s'effectuant, pendant lequel du liquide caloporteur est pompé en alternance du second et/ou premier réservoir Intermédiaire dans le système restant, et le liquide caloporteur refroidi pendant cette opération de pompage étant pompé du système restant dans le second et/ou premier réservoir intermédiaire.

6. Procédé en vue de l'exploitation d'un système de températion avec une machine frigorifique, un premier réservoir intermédiaire (Z1), un second réservoir intermédiaire (Z2), des soupapes et un système restant, le système restant étant approvisionné en liquide caloporteur tempéré,
**caractérisé en ce que**
le système de températion comporte deux pompes (P1, P2), et
**en ce que** la machine frigorifique amène le liquide caloporteur lors d'une première phase dans le premier réservoir Intermédiaire (Z1) à un niveau de température souhaité, tandis que le liquide caloporteur tempéré par le second réservoir intermédiaire (Z2) est remis au système restant, et
**en ce que** la machine frigorifique amène le liquide caloporteur lors de la seconde phase dans le second réservoir intermédiaire (Z2) à un niveau de température souhaité, tandis que le liquide caloporteur tempéré par le premier réservoir intermédiaire (Z1) est remis au système restant, et
un fonctionnement alternant de la première et/ou de la seconde phase s'effectuant, pendant lequel du liquide caloporteur est pompé en alternance du second et/ou premier réservoir intermédiaire dans le système restant, et le liquide caloporteur réchauffé pendant cette opération de pompage étant pompé du système restant dans le second et/ou premier réservoir intermédiaire.

7. Procédé en vue de l'exploitation d'un système de températion selon la revendication 5, **caractérisé en ce que**
les réservoirs intermédiaires sont parcourus lors du chargement via la pompe à chaleur et lors du déchargement dans le système restant dans des sens inverses, le sens de courant étant du haut vers le bas lors du chargement via la pompe à chaleur.

8. Procédé en vue de l'exploitation d'un système de températion selon la revendication 6, **caractérisé en ce que**
les réservoirs intermédiaires sont parcourus lors du chargement via la machine frigorifique et lors du déchargement dans le système restant dans des sens inverses, le sens de courant étant du bas vers le haut lors du chargement via la machine frigorifique.

9. Utilisation d'un système de températion selon une quelconque des revendications 1 à 4 pour le chauffage de locaux et/ou le réchauffement d'eau sanitaire.
